# EUROPEAN PATENT APPLICATION

(11) **EP 4 258 737 A1**
(43) Date of publication of application: **11.10.2023**
(21) Application number: 20963996.2
(22) Date of filing: 04.12.2020
(51) Int. Cl.: H04W 28/06

(54) **COMMUNICATION METHOD AND COMMUNICATION DEVICE UNDER MULTIPLE LINKS**

(71) Applicant: Beijing Xiaomi Mobile Software Co., Ltd., Beijing 100085 (CN)
(72) Inventor: DONG, Xiandong, Beijing 100085 (CN)
(74) Representative: dompatent von Kreisler Selting Werner - Partnerschaft von Patent- und Rechtsanwälten mbB
(86) International application number: PCT/CN2020/133889
(87) International publication number: WO 2022/116150

(57) **Abstract**

Provided are a communication method and a communication device under multiple links. The communication method comprises: determining a first message frame, wherein the first message frame comprises first information, and the first information is used for identifying that a multi-link device executes an enhanced multi-link single-radio (EMLSR) communication operation under at least some links among a plurality of links; and sending the first message frame. By means of the technical solution provided in the exemplary embodiments of the present disclosure, the system throughput can be improved.

## Description

### TECHNICAL FIELD

The disclosure relates to the field of communication technology, and more particularly, to a communication method and communication device on multiple links.

### BACKGROUND

A current research scope of Wi-Fi technology is: 320MHz bandwidth transmission, aggregation and coordination of multiple frequency bands, etc. It is expected to increase the rate and throughput by at least four times compared with the existing standard. The main application scenarios are: Video transmission, AR (Augmented Reality), VR (Virtual Reality), etc.

The aggregation and coordination of multiple frequency bands refers to a simultaneous communication between devices in frequency bands of 2.4GHz, 5.8GHz and 6-7GHz. For the simultaneous communication between devices in multiple frequency bands, it needs to define a new MAC (Media Access Control) mechanism to manage. In addition, it is also expected that the aggregation and coordination of multiple frequency bands can support low-latency transmission.

A current multi-band aggregation and system technology can support a maximum bandwidth of 320MHz (160MHz+160MHz), and may also support 240MHz (160MHz+80MHz) and other bandwidths supported by the existing standard.

An access point (AP) and the non-AP STA (non-access point device) included in the current wireless communication system may be a multi-link device (MLD), that is, a function to send and/or receive simultaneously on multiple links is supported. Therefore, there can be multiple links between AP MLD and non-AP STA MLD, and the communication on multiple links of these two devices will be studied.

### SUMMARY

The disclosure aims to address at least the above-mentioned problems and/or defects, and the following technical solution is provided by embodiments of the present disclosure.

According to exemplary embodiments of the disclosure, a communication method on multiple links is provided. The communication method is applied to a multi-link device and may include: determining a first message frame, in which the first message frame includes first information configured to identify that the multi-link device performs enhanced multi-link single-radio (EMLSR) operation on at least some links of the multiple links; and sending the first message frame.

According to exemplary embodiments of the disclosure, a communication method on multiple links is provided. The communication method includes: receiving a first message frame, in which the first message frame includes first information configured to identify that a multi-link device sending the first message frame performs enhanced multi-link single-radio (EMLSR) operation on at least some links of the multiple links; and performing communication based on the first message frame.

According to exemplary embodiments of the disclosure, a communication device on multiple links is provided. The communication device includes: a processing module, configured to determine a first message frame, in which the first message frame includes first information configured to identify that the communication device performs enhanced multi-link single-radio (EMLSR) operation on at least some links of the multiple links; and a communicating module, configured to send the first message frame.

According to exemplary embodiments of the disclosure, a communication device on multiple links is provided. The communication device includes a communicating module, configured to receive a first message frame, in which the first message frame includes first information configured to identify that a device sending the first message frame performs enhanced multi-link single-radio (EMLSR) operation on at least some links of the multiple links; and a processing module, configured to control the communicating module to perform communication based on the first message frame.

According to exemplary embodiments of the disclosure, an electronic device is provided. The electronic device includes a memory, a processor, and a computer program stored on the memory and executable on the processor. When the computer program is executed by the processor, the above mentioned method is implemented.

According to exemplary embodiments of the disclosure, a computer readable storage medium is provided. Computer programs are stored on the computer readable storage medium. When the computer programs are executed by a processor, the above mentioned method is implemented.

The technical solution provided by exemplary embodiments of the disclosure can improve spectrum utilization efficiency and improve throughput.

### BRIEF DESCRIPTION OF THE DRAWINGS

The above and other features of embodiments of the disclosure will become more apparent by describing in detail example embodiments of the disclosure with reference to the accompanying drawings.
FIG. 1 is an exemplary diagram illustrating a communication scenario on multiple links.
FIG. 2 is a flowchart illustrating a communication method according to an embodiment.
FIG. 3 is a flowchart illustrating another communication method according to an embodiment.
FIG. 4 is a block diagram illustrating a communication device according to an embodiment.

### DETAILED DESCRIPTION

The following description with reference to the accompanying drawings is provided to assist in a comprehensive understanding of embodiments of the disclosure as defined by the appended claims and their equivalents. The embodiments of the disclosure include various specific details, which are to be regarded as merely exemplary. Also, the descriptions of well-known techniques, functions, and constructions may be omitted for clarity and conciseness.

The terms and words used in the disclosure are not limited to the bibliographical meanings, but are merely used by the inventor to enable a clear and consistent understanding of the disclosure. Accordingly, the descriptions of embodiments of the disclosure are provided for purposes of illustration and not for purpose of limitation to those skilled in the art.

It should be understood by those skilled in the art that, unless the context clearly indicates otherwise, the singular forms "a", "one", "said" and "the" used herein may also include the plural forms. It should be further understood that the term "include" as used in the disclosure refers to the presence of the described features, integers, steps, operations, components and/or assemblies, but does not exclude the presence or addition of one or more other features, integers, steps, operations, components, assemblies and/or groups thereof.

It should be further understood that, although the terms "first", "second", etc. may be configured to describe various elements, these elements shall not be limited to these terms. These terms are only used to distinguish one element from another. Thus, a first element discussed below may also be referred to as a second element without departing from the teachings of exemplary embodiments.

It should be understood that when the component is "connected" or "coupled" to another component, it may be directly connected or coupled to other components, or there may be an intermediate component. In addition, "connected" or "coupled" as used herein may include wirelessly connected or wirelessly coupled. The term "and/or" or the expression "at least one/at least one of ..." includes any and all combinations of one or more of the associated listed items.

Unless otherwise defined, all terms (including technical and scientific terms) used herein have the same meaning as commonly understood by those skilled in the art to which the disclosure belongs.

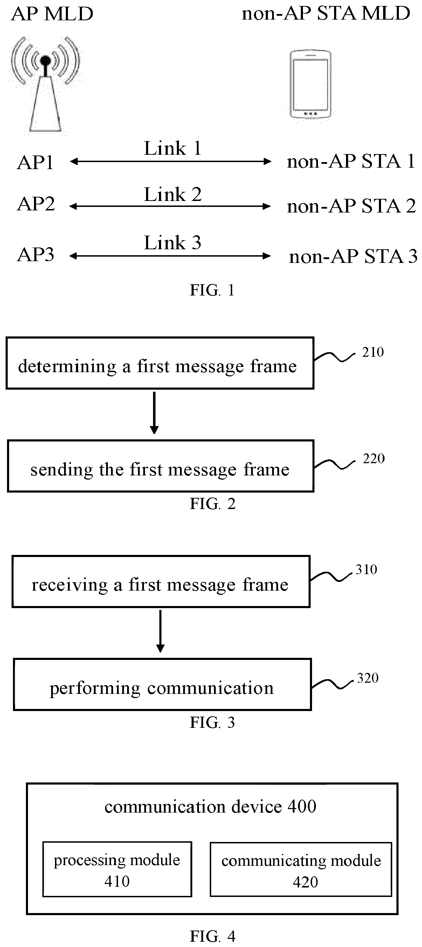

Fig. 1 is an exemplary diagram illustrating a communication scenario on multiple links.

In a wireless local area network, a basic service set (BSS) may consist of an AP and one or more non-AP STA devices that communicate with the AP. A basic service set can be connected to the distribution system (DS) through its AP, and then connected to another basic service set to form an extended service set (ESS).

The AP is a wireless switch for a wireless network, and also the core of the wireless network. The AP device can be used as a wireless base station, mainly used as a bridge for connecting wireless networks and wired networks. With this access point, wired and wireless networks can be integrated.

The AP may include software applications and/or circuitry to enable other types of nodes in the wireless network to communicate with the outside and inside of the wireless network via the AP. In some examples, as an example, the AP may be a terminal device or a network device equipped with a Wi-Fi (Wireless Fidelity) chip.

As an example, the non-AP STA device may include, but is not limited to: a cellular phone, a smart phone, a wearable device, a computer, a personal digital assistants (PDA), a personal communication system (PCS) device, a personal information manager (PIM), a personal navigation device (PND), a global positioning system, a multimedia device, an Internet of Things (IoT) device, etc.

In an exemplary embodiment of the disclosure, AP and non-AP STA devices may support a multi-link device (MLD), for example, they may be denoted as an AP MLD and a non-AP STA MLD, respectively. For convenience of description, hereinafter, an example in which one AP MLD communicates with one non-AP STA MLD on multiple links is mainly described, however, exemplary embodiments of the disclosure are not limited thereto.

In Fig. 1, only as an example, the AP MLD may represent an access point supporting the multi-link communication function, and the non-AP STA MLD may represent a non-access point device supporting the multi-link communication function. Referring to Fig. 1, AP MLD can work under three links, such as AP1, AP2 and AP3 shown in Fig. 1, and non-AP STA MLD can also work under three links, such as non-AP STA 1, non-AP STA 2 and non-AP STA 3 shown in Fig. 1. In the example of Fig. 1, it is assumed that AP1 communicates with non-AP STA 1 through a corresponding first link, i.e. Link 1. Similarly, AP2 and AP3 communicate with non-AP STA 2 and non-AP STA 3 through a second link, i.e. Link 2, and a third link, i.e. Link 3, respectively. Further, Link 1 to Link 3 may be multiple links at different frequencies, such as links at 2.4GHz, 5GHz, 6GHz, etc. or several links at 2.4GHz with same or different bandwidths. Further, multiple channels can exist under each link. However, it should be understood that the communication scenario shown in Fig. 1 is only exemplary, and the inventive concept is not limited thereto, for example, there may be fewer or more links between the AP MLD and the non-AP STA MLD, the AP MLD may connect to multiple non-AP STA MLDs, or under each link, the AP can communicate with multiple other types of stations.

In a current communication system, there can exist a station that supports two functions: EMLSR (enhanced multi-link single-radio) and EMLMR (enhanced multi-link multi-radio). EMLSR indicates that the non-AP STA MLD can only communicate with the AP MLD under one link at a certain time, and performs channel monitoring on multiple links; EMLMR indicates that the non-AP STA MLD can communicate with the AP MLD on multiple links at a certain time, and perform channel listening on multiple links. Hereinafter, EMLSR is mainly used as an example for description, however, it will be understood that embodiments of the disclosure are not limited thereto, for example, the methods described in the disclosure may also be applied to EMLMR.

Before the AP MLD and the non-AP STA MLD exchange data, the non-AP STA MLD receives parameters negotiated by the AP MLD for data exchange under each link under one link, such as the number of spatial streams, MCS (or non-HT PPDU data rate), PPDU type, and frame type, etc.

Although some parameters are defined, the behavior of AP MLD and non-AP STA MLD (which may be collectively referred to as STA MLD (station multi-link device)) is not defined, so the EMLSR mechanism cannot be applied. The embodiments of the disclosure improve the communication mode of the STA MLD, so that the EMLSR mechanism can be applied.

Fig. 2 is a flowchart illustrating a communication method according to an exemplary embodiment. The communication method shown in Fig. 2 can be applied to a multi-link device, for example, can be applied to a non-AP STA MLD.

Referring to Fig. 2, in step 210, a first message frame may be determined. In the embodiment of the disclosure, there may be many ways to determine the first message frame, for example, the non-AP STA MLD may generate the first message frame according to at least one of the following conditions: a network condition, a load condition, hardware capabilities of sending/receiving devices, a service type, and related protocols, which is not specifically limited in the embodiments of the disclosure. In embodiments of the present disclosure, the non-AP STA MLD may also acquire the first message frame from an external device, which is not specifically limited in embodiments of the present disclosure.

According to an embodiment, the first message frame may include first information on EMLSR operation. Specifically, the first information is configured to identify that the multi-link device performs enhanced multi-link single-radio (EMLSR) operation on at least some links of the multiple links. The multiple links refer to multiple links that can be supported by a multi-link device (for example, a non-AP STA MLD), for example, Link 1 to Link 3 shown in Fig. 1.

According to embodiments of the disclosure, a first message frame may be a probe request frame, an association request frame, a re-association request frame, or a ML probing request frame, etc.

In an embodiment, the first information included in the first message frame may have a format as shown in Table 1 below

**Table 1. Format of the first information**

| | | | |
|---|---|---|---|
| Link ID 1 | ...... | Link ID n | Handover latency |

Referring to Table 1, the first information may include link identifiers corresponding to at least some links for performing the EMLSR operation, i.e., link identifiers 1 to n (n is an integer greater than or equal to 1) in Table 1. Link ID 1 to Link ID n identify that these links are activated so that monitoring or transmission can take place under these links. For example, referring to Fig. 1, if the EMLSR operation can be performed under the first link, Link 1, and the third link, Link 3, the first information shown in Table 1 may include link identifiers corresponding to the first link, Link 1, and the third link, Link 3, respectively. That is, the first link Link 1 and the third link Link 3 are activated for monitoring or transmission. However, the implementation of carrying the information about the link for performing the EMLSR operation in the first information is not limited thereto. For example, in another embodiment, the first information may include state identifiers respectively corresponding to all multiple links that the multi-link device (e.g. non-AP STA MLD) can support. For example, referring to Fig. 1, assuming that the non-AP STA MLD can support 3 links, and can perform EMLSR operation under the first link Link 1 and the third link Link 3, then "101" may be included in the first information, the three bits are used to respectively indicate the states of the three links, the bit set to "1" may indicate that it can be used to perform EMLSR operation, and the bit set to "0" may indicate that it can be used to perform EMLSR operation. It is to be understood that the specific numerical values used herein are illustrative only, and not limiting of the disclosure.

Referring to Table 1, the first information may include: handover latency identification information indicating handover from one link to another link for data transmission. That is to say, when a non-AP STA MLD communicates with an AP MLD, if one link cannot meet the communication requirement, it needs to handover to another link for communication, and there will be a latency when handover to another link. In an embodiment, when the handover latency identifier in Table 1 is set to 0, the delay can be marked as 32us (microsecond); when the handover latency identifier in Table 1 is set to 1, the delay can be marked as 64us. It will be understood that the specific numerical values used herein are for illustrative only, rather than limitations of the disclosure. For example, multiple bits may be used to represent the handover latency identifiers, thereby identifying multiple different latency values, such as, 32us, 64us, 48us, etc.

In an embodiment, the handover latency under each link may be consistent. However, the disclosure is not limited thereto. Table 1 may also include a plurality of latency identifiers to define the latency value of switching to each link as different values.

In an embodiment, the first message frame may include a multi-link information element (ML), and the first information (as shown in Table 1) may be carried in the first message in the form of a multi-link information element. That is, the first information may be included in the multi-link information element.

According to an embodiment, a probe request frame, a (re)association request frame or an ML probing request frame may contain an ML information element, which identifies the link under which the non-AP STA MLD can perform EMLSR operation, as shown in Table 1. In Table 1, the Link ID identifies that these links are activated and can monitor or transmit, and the handover latency identifies the latency in handover from one link to another to send data. The handover latency under each link can be consistent, the latency of handover to each link can also be defined as having a different handover latency value.

In an embodiment, the first message frame may further include: an identification bit indicating that the multi-link device (e.g. non-AP STA MLD) supports EMLSR. For example, the first message frame may include an extremely high throughput (EHT) capabilities information element, and an identification bit indicating that the non-AP STA MLD supports EMLSR may be included in the EHT capabilities information element. For example, the EHT capabilities information element may be an EHT MAC capabilities information element or an EHT PHY capabilities information element. That is, the identification bit indicating that the non-AP STA MLD supports EMLSR may be included in the EHT MAC capabilities information element or the EHT PHY capabilities information element.

According to an embodiment, the non-AP STA MLD may use a field in the EHT capabilities information element to identify that it supports EMLSR (e.g. identifying with one bit), the EHT capabilities information element may be EHT MAC capabilities or EHT PHY capabilities. The non-AP STA MLD may include the EHT capabilities information element in a probe request frame, a (re)association request frame, or an ML probing request frame.

Continuing to refer to Fig. 2, in step 220, the first message frame may be sent. For example, the non-AP STA MLD may send the first message frame carrying the first information and the identification bit indicating that EMLSR is supported to the AP MLD, to further communicate with the AP MLD, for example, in an EMLSR manner.

It will be understood that the steps included in the communication method shown in Fig. 2 are only exemplary, and embodiments of the disclosure are not limited thereto.

In another embodiment, the communication method shown in Fig. 2 may further include: receiving a second message frame. For example, the second message frame is received from the AP MLD. According to the embodiment, the second message frame may include parameter information for performing the EMLSR operation. That is, the AP MLD can configure the non-AP STA MLD with parameters required for EMLSR operation. In an embodiment, in response to the first message frame sent by the non-AP STA MLD in step 220, the AP MLD may send a second message frame to the non-AP STA MLD to configure the non-AP STA MLD with parameters required for EMLSR operation.

According to the embodiment, the parameter information may include at least one of:
information on spatial streams (e.g. number of spatial streams);
information on modulation and coding scheme (MCS) (for example, MCS index);
information on physical layer protocol data unit (PPDU) (e.g. PPDU type); or
information on frame type.

It will be understood that the parameter information shown here is merely illustrative and not limiting of the disclosure.

In an embodiment, the AP MLD may configure the same parameter for the non-AP STA MLD in the second message frame. In a case that the parameter information is set differently under different links, the second message frame further includes link identifiers corresponding to the parameter information. That is, in this case, the second message frame may carry the parameter information as described above in the form of information element.

In another embodiment, the AP MLD may configure different parameters for the non-AP STA MLD in the second message frame. In this case, the second message frame may not only include parameter information under each link, but may also include link identifiers corresponding to the parameter information.

According to an embodiment, the AP MLD may configure the same parameter (under each link) for the non-AP STA MLD, or configured different parameters under different links for the non-AP STA MLD. For example, the parameter may be configured in the form of information element, and the specific parameter may be: spatial streams, MCS index, PPDU type, etc. If the parameter under each link is inconsistent, the Link ID must be used as the identifier to appear together with the parameters.

In the embodiment of the present disclosure, the transmission of the first message frame and the second message frame may be performed under any link between the non-AP STA MLD and the AP MLD, for example, the transmission of the first message frame and the second message frame may be performed under any activated link from Link 1 to Link 3 shown in Fig. 1.

The communication method described with reference to Fig. 2 enables the application of the EMLSR mechanism to improve the utilization efficiency of the spectrum and the system throughput.

Fig. 3 is a flowchart illustrating another communication method according to an embodiment of the disclosure. The communication method shown in Fig. 3 can be applied to an access point, for example, AP MLD.

Referring to Fig. 3, in step 310, a first message frame is received. According to the embodiment, the first message frame may include first information configured to identify that a multi-link device (e.g. non-AP STA MLD) sending the first message frame performs enhanced multi-link single-radio (EMLSR) operation on at least some links of the multiple links.

According to an embodiment, the first information may include link identifiers corresponding to the at least some links for performing the EMLSR operation.

According to an embodiment, the first information may include handover latency identification information indicating handover from one link to another link for data transmission.

According to an embodiment, the first information may be carried in the first message frame in the form of a multi-link information element.

The first message frame and the first information in step 310 may be similar to the description with reference to Fig. 2 and Table 1, and the repeated description is omitted here for brevity.

According to an embodiment, the first message frame may further include: an identification bit indicating that the multi-link device sending the first message frame supports EMLSR. According to an embodiment, the identification bit may be included in an extremely high throughput (EHT) capabilities information element of the first message frame. The identification bit may be similar to the description with reference to Fig. 2, and the repeated description is omitted here for brevity.

In step 320, communication may be performed based on the first message frame. For example, an EMLSR operation may be performed under a corresponding link.

Further, although not being illustrated, the communication method shown in Fig. 3 may also include: sending a second message frame, in which the second message frame includes parameter information for performing the EMLSR operation. That is, the AP MLD may configure parameter information for the non-AP STA MLD by sending the second message frame to it. In an embodiment, the AP MLD may send the second message frame to the non-AP STA MLD in response to receiving the first message frame from the non-AP STA MLD, to configure the non-AP STA MLD the parameter required for EMLSR operation.

According to an embodiment, the parameter information included in the second message frame may include at least one of:
information on spatial streams;
information on modulation and coding scheme;
information on physical layer protocol data unit; or
information on frame type.

In an embodiment, the AP MLD may configure the same parameter for the non-AP STA MLD in the second message frame. In this case, the second message frame may carry the parameter information as described above in the form of information element.

In another embodiment, the AP MLD may configure different parameters for the non-AP STA MLD in the second message frame. In a case that the parameter information is set differently under the different links, the second message frame may further include link identifiers corresponding to the parameter information. That is, in this case, the second message frame may not only include parameter information under each link, but may also include link identifiers corresponding to the parameter information.

The communication method described with reference to Fig. 3 enables the application of the EMLSR mechanism to improve the utilization efficiency of the spectrum and the system throughput.

Fig. 4 illustrates a communication device according to an embodiment of the disclosure.

Referring to Fig. 4, the communication device 400 may include a processing module 410 and a communicating module 420. The communication device shown in Fig. 4 can be applied to a non-AP STA MLD or AP MLD.

In a case that the communication device shown in Fig. 4 is applied to the non-AP STA MLD, the processing module 410 may be configured to determine a first message frame, in which the first message frame includes first information configured to identify that the communication device performs enhanced multi-link single-radio (EMLSR) operation on at least some links of the multiple links. The communicating module 420 may be configured to send the first message frame.

According to an embodiment, the first information may include link identifiers corresponding to the at least some links for performing the EMLSR operation.

According to an embodiment, the first information may include handover latency identification information indicating handover from one link to another link for data transmission.

According to an embodiment, the first information may be carried in the first message frame in the form of a multi-link information element.

The first message frame and the first information may be similar to the description with reference to Fig. 2 and Table 1, and the repeated description is omitted here for brevity.

According to an embodiment, the first message frame may further include: an identification bit indicating that the device sending the first message frame supports EMLSR. According to an embodiment, the identification bit is included in an extremely high throughput (EHT) capabilities information element of the first message frame. The identification bit may be similar to the description with reference to Fig. 2, and the repeated description is omitted here for brevity.

According to an embodiment, the communication module 420 may further configured to: receive a second message frame, in which the second message frame includes parameter information for performing the EMLSR operation, such as spatial streams, MCS index, PPDU type, frame type, etc. According to the embodiment, in a case that the parameter information is set differently under different links, the second message frame may further include link identifiers corresponding to the parameter information. The parameter information may be similar to the description with reference to Fig. 2, and the repeated description is omitted here for brevity.

In a case that the communication device shown in Fig. 4 is applied to the AP MLD, the communication module 420 may be configured to: receive a first message frame, in which the first message frame includes first information configured to identify that a device sending the first message frame performs enhanced multi-link single-radio (EMLSR) operation on at least some links of the multiple links. The processing module 410 may be configured to control the communicating module to perform communication based on the first message frame.

The descriptions about the first message frame and the first information may be similar to the descriptions in Fig. 2 and Table 1, and the repeated description is omitted here for brevity.

According to an embodiment, the processing module 410 may be further configured to: determine a second message frame, and control the communication module 420 to send the second message frame to the non-AP STA MLD, in which the second message frame includes parameter information required to perform the EMLSR operation. The description about the second message frame and the parameter information may be similar to the above embodiments, and the repeated description is omitted here for brevity.

The communication device described with reference to Fig. 4 enables the application of the EMLSR mechanism to improve the utilization efficiency of the spectrum and the system throughput.

The communication device 400 shown in Fig. 4 can perform the communication method described with reference to Fig. 2 or 3, and the repeated description is omitted here for brevity. In addition, the communication device 400 shown in Fig. 4 is only exemplary, and embodiments of the present disclosure are not limited thereto. For example, the communication device 400 may further include other modules, such as a memory module and the like. Further, the various modules in the communication device 400 may be combined into more complex modules, or may be divided into more separate modules.

Based on the same principles as the methods provided by embodiments of the disclosure, embodiments of the disclosure further provide an electronic device, the electronic device includes a processor and a memory; in which, the memory stores machine-readable instructions (or may referred to as a "computer program"); a processor for executing machine-readable instructions to implement the methods described with reference to Figs. 2 and 3.

Embodiments of the disclosure also provide a computer-readable storage medium, a computer program is stored on the computer-readable storage medium. When the computer program is executed by a processor, the methods described with reference to Figs. 2 and 3 are implemented.

In an exemplary embodiment, the processor may be configured to implement or execute various exemplary logical blocks, modules and circuits described in connection with the present disclosure, for example, a Central Processing Unit (CPU), a general processor, a Digital Signal Processor (DSP), an Application Specific Integrated Circuit (ASIC), a Field Programmable Gate Array (FPGA), or other programmable logic devices, transistor logic devices, hardware components or any combination thereof. The processor may also be a combination used to implement a computing function, for example, a combination consisting of one or more microprocessors, or a combination consisting of DSPs and microprocessors.

In an exemplary embodiment, the memory may be a Read Only Memory (ROM), a Random Access Memory (RAM), an Electrically Erasable Programmable Read Only Memory (EEPROM), a Compact Disc Read Only Memory (CD-ROM) or other optical disc memories, optical disk memories (including compact disc, laser disc, CD-ROM, digital general disc, Blu-ray disc and the like), disk storage mediums or other magnetic storage devices, or any other medium that can be used to carry or store program codes in the form of instructions or data structures and can be accessed by a computer, which is not limited herein.

It should be understood that although steps in the flowchart of the accompanying drawings are shown sequentially as indicated by the arrows, the steps are not necessarily performed sequentially in the order indicated by the arrows. Unless explicitly stated otherwise in the disclosure, there is no strict sequential limitation on the execution of these steps, which may be performed in other orders. In addition, at least some of the steps in the flowchart of the accompanying drawings may include a plurality of sub-steps or a plurality of phases, which are not necessarily executed at the same time, and may be executed at different times. The execution order is not necessarily sequential, and the steps can be performed alternately or alternatively with other steps or at least part of sub-steps or phases of other steps.

Although the present disclosure has been illustrated and described with reference to certain embodiments of the disclosure, it will be understood by those skilled in the art that various changes in form and details may be made therein without departing from the scope of the disclosure. Therefore, the scope of the disclosure should not be limited by the embodiments, but should be defined by the appended claims and their equivalents.

## Claims

1. A communication method on multiple links, applied to a multi-link device, comprising:
determining a first message frame, wherein the first message frame comprises first information configured to identify that the multi-link device performs enhanced multi-link single-radio (EMLSR) operation on at least some links of the multiple links; and
sending the first message frame.

2. The communication method according to claim 1, wherein the first information comprises link identifiers corresponding to the at least some links for performing the EMLSR operation.

3. The communication method according to claim 1 or 2, wherein the first information further comprises handover latency identification information indicating handover from one link to another link for data transmission.

4. The communication method according to any one of claims 1 to 3, wherein the first information is carried in the first message frame in the form of a multi-link information element.

5. The communication method according to any one of claims 1 to 4, wherein the first message frame further comprises an identification bit indicating that the multi-link device supports EMLSR.

6. The communication method according to claim 5, wherein the identification bit is comprised in an extremely high throughput (EHT) capabilities information element of the first message frame.

7. The communication method according to any one of claims 1 to 6, further comprising:
receiving a second message frame, wherein the second message frame comprises parameter information for performing the EMLSR operation.

8. The communication method according to claim 7, wherein the parameter information comprises at least one of:
information on spatial streams;
information on modulation and coding scheme;
information on physical layer protocol data unit; or
information on frame type.

9. The communication method according to claim 7 or 8, wherein,
in a case that the parameter information is set differently on the at least some links, the second message frame further comprises link identifiers corresponding to the parameter information.

10. A communication method on multiple links, applied to an access point, comprising:
receiving a first message frame, wherein the first message frame comprises first information configured to identify that a multi-link device sending the first message frame performs enhanced multi-link single-radio (EMLSR) operation on at least some links of the multiple links; and
performing communication based on the first message frame.

11. The communication method of claim 10, wherein the first information comprises link identifiers corresponding to the at least some links for performing the EMLSR operation.

12. The communication method according to claim 10 or 11, wherein the first information further comprises handover latency identification information indicating handover from one link to another link for data transmission.

13. The communication method according to any one of claims 10 to 12, wherein the first information is carried in the first message frame in the form of a multi-link information element.

14. The communication method according to any one of claims 10 to 13, wherein the first message frame further comprises an identification bit indicating that the multi-link device supports EMLSR.

15. The communication method according to claim 14, wherein the identification bit is comprised in an extremely high throughput (EHT) capabilities information element of the first message frame.

16. The communication method according to any one of claims 10 to 15, further comprising:
sending a second message frame, wherein the second message frame comprises parameter information for performing the EMLSR operation.

17. The communication method according to claim 16, wherein the parameter information comprises at least one of:
information on spatial streams;
information on modulation and coding scheme;
information on physical layer protocol data unit; or
information on frame type.

18. The communication method according to claim 16 or 17, wherein, in a case that the parameter information is set differently on the at least some links, the second message frame further comprises link identifiers corresponding to the parameter information.

19. A communication device on multiple links, comprising:
a processing module, configured to determine a first message frame, wherein the first message frame comprises first information configured to identify that the communication device performs enhanced multi-link single-radio (EMLSR) operation on at least some links of the multiple links; and
a communicating module, configured to send the first message frame.

20. A communication device on multiple links, comprising:
a communicating module, configured to receive a first message frame, wherein the first message frame comprises first information configured to identify that a device sending the first message frame performs enhanced multi-link single-radio (EMLSR) operation on at least some links of the multiple links; and
a processing module, configured to control the communicating module to perform communication based on the first message frame.

21. An electronic device, comprising a memory, a processor, and a computer program stored on the memory and executable on the processor, wherein when the computer program is executed by the processor, the method according to any one of claims 1 to 9 or 10 to 18 is implemented.

22. A computer readable storage medium having computer programs stored thereon, wherein when the computer programs are executed by a processor, the method according to any one of claims 1 to 9 or 10 to 18 is implemented.
